# EUROPEAN PATENT APPLICATION

(11) **EP 3 804 986 A1**
(43) Date of publication of application: **14.04.2021**
(21) Application number: 19810327.7
(22) Date of filing: 24.05.2019
(51) Int. Cl.: B32B 27/32, B30B 15/02, B32B 5/18, H01G 13/00, H01F 41/04

(54) **WORKPIECE PROTECTION SHEET**

(30) Priority: 31.05.2018 JP 2018105175
(71) Applicant: NITTO DENKO CORPORATION, Ibaraki-shi Osaka 567-8680 (JP)
(72) Inventor: ARAI, Masahiro, Ibaraki-shi, Osaka 567-8680 (JP)
(74) Representative: Müller-Boré & Partner Patentanwälte PartG mbB
(86) International application number: PCT/JP2019/020764
(87) International publication number: WO 2019/230611

(57) **Abstract**

The workpiece protection sheet of the present disclosure is used between a suction table and a workpiece in a state where the workpiece protection sheet is sucked to the suction table when the workpiece is pressed on the suction table. The workpiece protection sheet of the present disclosure includes a base layer and an ultrahigh molecular weight polyethylene porous layer, an air permeability in a thickness direction of the workpiece protection sheet measured such that the base layer side is at an upstream side of airflow during measuring is 4000 seconds/100 mL or more as represented by a Gurley air permeability measured according to Method B of air permeability measurement specified in JIS L1096, a suction surface to be sucked to the suction table is composed of the base layer, and a contact surface to be in contact with the workpiece is composed of the ultrahigh molecular weight polyethylene porous layer. With the workpiece protection sheet of the present disclosure, the releasability of a workpiece after pressing is improved.

## Description

### TECHNICAL FIELD

The present invention relates to a workpiece protection sheet.

### BACKGROUND ART

A process of pressing a workpiece has been known. The workpiece is, for example, a laminate of ceramic green sheets used for manufacturing a laminated ceramic capacitor, a laminated chip inductor, and the like. Patent Literature 1 discloses an adhesive sheet used when a laminate of ceramic green sheets is pressed. At the adhesive sheet, the laminate, which is a workpiece, is placed on an adhesive layer.

### CITATION LIST

### Patent Literature

Patent Literature 1: JP 2005-255829 A

### SUMMARY OF INVENTION

### Technical Problem

It is conceivable to press a workpiece on a suction table for the purpose of, for example, preventing displacement of the workpiece during pressing. At this time, in order to protect the workpiece from scratches caused by contact with the suction table and foreign matter adhered to the suction table, it is desirable to place a workpiece protection sheet between the suction table and the workpiece. In addition, in order to detect the placement of the workpiece protection sheet onto the suction table through a change in suction pressure to thereby enable automatic operation of a pressing apparatus, the workpiece protection sheet needs to have low air permeability in the thickness direction thereof in a state where the workpiece protection sheet is placed on the suction table.

In recent years, development of very small laminated ceramic capacitors and laminated chip inductors such as 0402 type (0.4 mm × 0.2 mm) and 0201 type (0.125 mm × 0.125 mm) is in progress. In order to manufacture these ultra-small laminated chips, a resin having strong adhesiveness may be used as a binder resin contained in ceramic green sheets. In addition, increasing the pressure as a pressing condition for the purpose of, for example, improving the efficiency of pressing is assumed. However, for example, with the adhesive sheet of Patent Literature 1, it is difficult to ensure releasability of a workpiece after pressing under the above condition.

It is an object of the present invention to provide a workpiece protection sheet that is used between a suction table and a workpiece in a state where the workpiece protection sheet is sucked to the suction table when the workpiece is pressed on the suction table and that improves the releasability of the workpiece after pressing.

### Solution to Problem

The present invention provides a workpiece protection sheet that is used between a suction table and a workpiece in a state where the workpiece protection sheet is sucked to the suction table when the workpiece is pressed on the suction table, the workpiece protection sheet including:
a base layer; and
an ultrahigh molecular weight polyethylene (hereinafter, referred to as "UHMWPE") porous layer, wherein
an air permeability in a thickness direction of the workpiece protection sheet measured such that the base layer side is at an upstream side of airflow during measuring is 4000 seconds/100 mL or more as represented by a Gurley air permeability measured according to Method B of air permeability measurement specified in JIS (Japanese Industrial Standards) L1096,
a suction surface to be sucked to the suction table is composed of the base layer, and
a contact surface to be in contact with the workpiece is composed of the UHMWPE porous layer.

### Advantageous Effects of Invention

With the workpiece protection sheet according to the present invention, the releasability of a workpiece after pressing is improved by the UHMWPE porous layer having excellent releasability, while the low air permeability in the thickness direction required as the workpiece protection sheet is maintained by the base layer.

### BRIEF DESCRIPTION OF THE DRAWINGS

FIG. 1 is a cross-sectional view schematically showing an example of the workpiece protection sheet of the present invention.
FIG. 2 is a cross-sectional view schematically showing an example of use of the workpiece protection sheet of the present invention.

### DESCRIPTION OF EMBODIMENTS

Hereinafter, embodiments of the present invention will be described with reference to the drawings. The present invention is not limited to the embodiments described below.

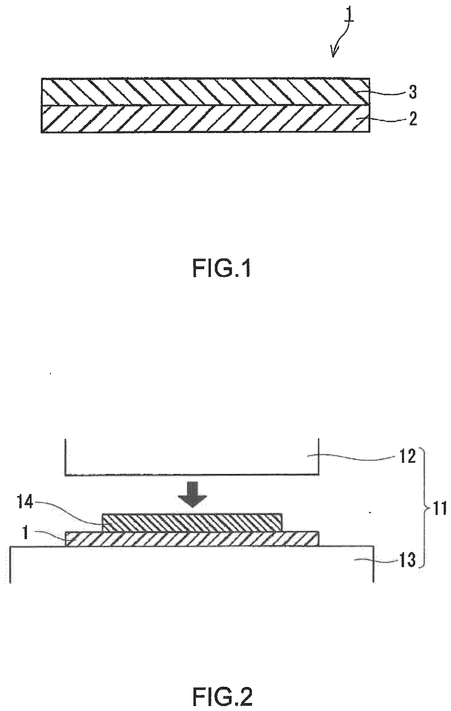

FIG. 1 shows an example of the workpiece protection sheet of the present invention. A workpiece protection sheet 1 in FIG. 1 includes a base layer 2 and a UHMWPE porous layer 3. The base layer 2 is exposed in a principal surface of the workpiece protection sheet 1, and the UHMWPE porous layer 3 is exposed in the other principal surface of the workpiece protection sheet 1. In the workpiece protection sheet 1, a suction surface to be sucked to a suction table is composed of the base layer 2, and a contact surface to be in contact with a workpiece is composed of the UHMWPE porous layer 3. An air permeability in the thickness direction of the workpiece protection sheet 1 measured such that the base layer 2 side of the workpiece protection sheet 1 is at the upstream side of airflow during measurement is 4000 seconds/100 mL or more as represented by a Gurley air permeability measured according to Method B of air permeability measurement specified in JIS L1096. Thus, the air permeability in the thickness direction (air permeability in the direction of suction by the suction table) of the workpiece protection sheet 1 in a state where the workpiece protection sheet 1 is placed on the suction table is low, and, for example, placement of the workpiece protection sheet 1 onto the suction table can be detected through a change in suction pressure. The base layer 2 and the UHMWPE porous layer 3 are joined to each other.

The UHMWPE porous layer 3 is a porous layer formed from an UHMWPE. The UHMWPE has a weight-average molecular weight (Mw) of, for example, 500,000 or more, preferably 1,000,000 or more, and more preferably 1,500,000 or more. Unlike ordinary polyethylene, the UHMWPE has characteristics such as high abrasion resistance, impact resistance, chemical resistance, and a low coefficient of friction. In addition, the cushioning property of the UHMWPE porous layer 3 having countless voids therein is high. Therefore, the workpiece protection performance of the workpiece protection sheet 1 can be improved, and the accuracy of pressing can be improved depending on the type of workpiece. The effect of improving the accuracy of pressing is significant particularly in the case of a workpiece having low rigidity such as ceramic green sheets. The upper limit of the Mw of the UHMWPE is not limited, and is, for example, 10,000,000 or less. The Mw of the UHMWPE can be evaluated by a high temperature gel permeation chromatography method (high temperature GPC method).

The UHMWPE porous layer 3 is typically a layer (particle-bonded layer) composed of UHMWPE particles that are bonded together and having countless voids between the particles. In the case where the UHMWPE porous layer 3 is a particle-bonded layer, when the workpiece protection sheet 1 is used, fine foreign matter such as fibers can be prevented from falling off, and damage to a workpiece due to the foreign matter can be prevented. The average particle diameter of the particles forming the UHMWPE porous layer 3 that is a particle-bonded layer is, for example, 10 to 500 µm, and preferably 15 to 300 µm.

The thickness of the UHMWPE porous layer 3 is, for example, 0.050 to 3.0 mm, and may be 0.10 to 2.0 mm or 0.15 to 1.5 mm.

The porosity of the UHMWPE porous layer 3 is, for example, 15 to 50%, and preferably 20 to 45%. The porosity can be obtained by the equation: porosity (%) = (1 - M / (V × D)) × 100 from a volume V (cm³), a true specific gravity D (g/cm³), and a mass M (g) of the UHMWPE porous layer 3.

When at least one selected from among the average particle diameter, the thickness, and the porosity of the UHMWPE porous layer 3, preferably at least two selected therefrom, and more preferably all of them are within the above-described ranges, the releasability of a workpiece after pressing is more reliably improved. In addition, the cushioning property of the UHMWPE porous layer 3 can be further enhanced.

The air permeability in the thickness direction of the UHMWPE porous layer 3 is, for example, 500 seconds/100 mL or less, and may be 300 seconds/100 mL or less or even 100 seconds/100 mL or less, as represented by a Gurley air permeability. The upper limit of the air permeability in the thickness direction (the lower limit of the Gurley air permeability) is, for example, 0.01 seconds/100 mL or more, and may be 0.1 seconds/100 mL or more, 1 second/100 mL or more, or even 10 seconds/100 mL or more. In the present description, the Gurley air permeability means an air permeability measured according to Method B (Gurley method) of air permeability measurement specified in JIS L1096.

Even when the size of an object to be evaluated does not satisfy the test piece size (about 50 mm × 50 mm) in the above Gurley method, it is possible to evaluate the Gurley air permeability by using a measurement jig. An example of the measurement jig is a polycarbonate disc provided with a through hole (having a circular cross section with a diameter of 1 mm or 2 mm) at the center thereof and having a thickness of 2 mm and a diameter of 47 mm. Measurement of a Gurley air permeability using the measurement jig can be performed as follows.

An object to be evaluated is fixed to one surface of the measurement jig so as to cover the opening of the through hole of the jig. The fixation is performed such that, during measurement of a Gurley air permeability, air passes through only the opening and an effective test portion (portion overlapping the opening when viewed in a direction perpendicular to a main surface of the fixed object to be evaluated) of the object to be evaluated, and the fixed portion formed by the fixation does not hinder passing of air through the effective test portion of the object to be evaluated. For fixing the object to be evaluated, a double-faced adhesive tape having a ventilation port punched in a center portion thereof with a shape that matches the shape of the opening can be used. The double-faced adhesive tape can be placed between the measurement jig and the object to be evaluated such that the circumference of the ventilation port and the circumference of the opening coincide with each other. Next, the measurement jig having the object to be evaluated fixed thereto is set on a Gurley air permeability testing machine such that the surface on which the object to be evaluated is fixed is at the downstream side of airflow during measurement, and a time t1 taken for 100 mL of air to pass through the object to be evaluated is measured. Next, the measured time t1 is converted into a value t per effective test area of 642 [mm²] specified in Method B (Gurley method) of air permeability measurement in JIS L1096, by the equation t = {(t1) × (area of effective test portion of object to be evaluated [mm²]) / 642 [mm²]}, and the obtained conversion value t can be regarded as the Gurley air permeability of the object to be evaluated. When the above disc is used as the measurement jig, the area of the effective test portion of the object to be evaluated is the area of a cross section of the through hole. It should be noted that it has been confirmed that the Gurley air permeability measured without using the measurement jig for a film satisfying the above test piece size and the Gurley air permeability measured using the measurement jig after fragmenting the film coincide well with each other, that is, the use of the measurement jig does not substantially affect the measured values of the Gurley air permeability.

The surface roughness (Ra) of the exposed surface of the UHMWPE porous layer 3, which is a contact surface to be in contact with a workpiece, is preferably 0.9 µm or less, and may be 0.7 µm or less, 0.5 µm or less, or even 0.3 µm or less. The lower limit of the Ra is not limited, and is, for example, 0.05 µm or more. The contact surface having an Ra within the above range has particularly high smoothness, and thus the releasability of a workpiece after pressing is further reliably improved. In the present description, the Ra means the "center line average roughness Ra" specified in JIS B0601: 1982. The Ra can be evaluated by a surface roughness measuring machine that complies with the JIS regulation (1976 or 1982 revised version) regarding "Geometrical Product Specifications (GPS)-Surface texture: Profile method-Terms, definitions and surface texture parameters".

The surface resistivity of the exposed surface of the UHMWPE porous layer 3, which is a contact surface to be in contact with a workpiece, is preferably 9.9×10¹³ ohms per square or less, and may be 1.0×10¹³ ohms per square or less, 1.0×10¹² ohms per square or less, 1.0×10¹¹ ohms per square or less, or even 1.0×10¹⁰ ohms per square or less. The lower limit of the surface resistivity is not limited, and is, for example, 1.0×10⁴ ohms per square or more. When the surface resistivity of the contact surface is within these ranges, the releasability of a workpiece after pressing is further reliably improved. This effect is significant particularly in the case where the workpiece contains a resin that has a polar functional group such as an acrylic resin. The surface resistivity can be evaluated by a resistivity meter (for example, Hiresta manufactured by Nittoseiko Analytech Co., Ltd.) that can measure the surface resistivity of a high resistance material.

The high releasability of the UHMWPE porous layer 3 can be evaluated by the adhesive strength of an adhesive tape to this layer. Specifically, the adhesive strength (peel adhesive strength) of the adhesive tape evaluated by the following method for the exposed surface of the UHMWPE porous layer 3 is, for example, 3.2 N/19 mm or less, and may be 3.0 N/19 mm or less or even 2.8 N/19 mm or less. The lower the adhesive strength of the adhesive tape is, the higher the releasability of the UHMWPE porous layer 3 is.

### <Method for Evaluating Adhesive Strength>

The adhesive strength is evaluated according to "Method 1" in the adhesive strength test method specified in JIS Z0237: 2009. However, the evaluation is carried out under the conditions described below.

The workpiece protection sheet 1 is used as a test plate. In addition, the exposed surface of the UHMWPE porous layer 3 is used as a surface to which a test piece (adhesive tape) is pressure-bonded.

Adhesive tape No. 31B (thickness: 53 µm) having a polyester substrate and manufactured by Nitto Denko Corporation is used as the test piece.

The width of the test piece is set to 19 mm, and the length of the test piece is set to 300 mm.

The number of times of reciprocation of a rubber roller (mass: 2 kg) that bonds the test piece to the test plate by pressure is set to one.

The test piece is left for 30 minutes in an atmosphere of 25°C and 65%RH from the pressure-bonding by the roller until the test is carried out.

The test temperature is set to 25°C.

The tensile speed (peeling speed) is set to 300 mm/min.

After starting peeling of the test piece, the adhesive strength is measured each time the test piece is peeled by 40 mm. The adhesive strength is measured four times in total. In addition, three test pieces are prepared, Method 1 is carried out for each test piece, and the average value of 12 adhesive strengths obtained is regarded as the adhesive strength of the adhesive tape to the UHMWPE porous layer 3.

The UHMWPE porous layer 3 can be formed, for example, by the following method A or B.

Method A: The UHMWPE particles are sintered in a state where a mold is filled with the UHMWPE particles, to form a sintered block body in which the particles are bonded together, and the formed sintered block body is cut to obtain a sheet-shaped UHMWPE porous layer 3. In the method A, the shape of the inner space of the mold to be filled with the particles may be cylindrical. In this case, a cylindrical sintered block body can be formed. The cylindrical sintered block body is relatively easily cut into a sheet. The sintering temperature is equal to or higher than the melting point of the UHMWPE, and pressurization can be used in combination with the sintering.

Method B: A slurry obtained by dispersing the UHMWPE particles in a dispersion medium is applied to a transfer sheet with a predetermined thickness, and heated to a temperature equal to or higher than the melting point of the UHMWPE, to be sintered into a sheet. An example of the transfer sheet is a metal sheet. The surface of the transfer sheet to which the slurry is to be applied may be subjected to a mold release treatment. The dispersion medium is a medium that does not deteriorate the UHMWPE and that evaporates at the sintering temperature. Examples of the dispersion medium include alcohols such as ethanol, water, and organic solvents.

In the case of forming the UHMWPE porous layer 3 by the method A or B, the characteristics of the formed UHMWPE porous layer 3 can be controlled by selecting the average particle diameter and/or the particle size distribution of the UHMWPE particles. Examples of the characteristics include porosity, air permeability in the thickness direction, and the surface roughness of a principal surface (exposed surface). In the case of decreasing the surface roughness of the principal surface, UHMWPE particles having a small average particle diameter are preferably used.

Various treatments may be performed on the formed UHMWPE porous layer. An example of the treatments is an antistatic treatment. The UHMWPE is a material having extremely high electrical insulation, but the surface resistivity of the UHMWPE porous layer can be appropriately decreased to be, for example, within the above-described range by the antistatic treatment.

As the antistatic treatment, for example, a method of coating the UHMWPE porous layer with an antistatic agent can be adopted. The coating with the antistatic agent can be performed, for example, by applying a treatment liquid containing the antistatic agent to the UHMWPE porous layer, and then drying the applied treatment liquid. The medium of the treatment liquid is a medium that does not deteriorate the UHMWPE and that evaporates at a drying temperature lower than the melting point of the UHMWPE. Examples of the medium include alcohols such as ethanol, water, and organic solvents. The treatment liquid may further contain any material other than the antistatic agent, for example, additives. Examples of the additives include an ultraviolet absorber and a mold release agent. The application of the treatment liquid can be performed by a known method, for example, casting, dipping, roll coating, gravure coating, screen printing, reverse coating, spray coating, kiss coating, die coating, metering bar coating, chamber doctor-using coating, curtain coating, and bar coating. The drying temperature is, for example, 50 to 130°C, and preferably 60 to 110°C.

Examples of the antistatic agent include various surfactants such as cationic surfactants, anionic surfactants, amphoteric surfactants, and nonionic surfactants. The antistatic agent is preferably a cationic surfactant, an anionic surfactant, or a nonionic surfactant. Two or more antistatic agents may be used in combination, but it is better not to use a cationic surfactant and an anionic surfactant in combination. However, the antistatic agent is not limited to the surfactants.

Examples of cationic surfactants that can be used as the antistatic agent include alkyl ammonium acetates, alkyldimethylbenzyl ammonium salts, alkyltrimethyl ammonium salts, dialkyldimethyl ammonium salts, alkyl pyridinium salts, oxyalkylenealkyl amines, and polyoxyalkylenealkyl amines.

Examples of anionic surfactants that can be used as the antistatic agent include: fatty acid soda soaps such as sodium stearate soap; alkyl sulfates such as sodium lauryl sulfate; alpha sulfo fatty acid ester salts; alkyl ether sulfates; sodium alkyl benzene sulfonates; sodium alkyl naphthalene sulfonates; dialkyl sulfosuccinates; alkyl phosphates; and alkyl diphenyl ether disulfonates.

Examples of amphoteric surfactants that can be used as the antistatic agent include alkyl carboxy betaines.

Examples of nonionic surfactants that can be used as the antistatic agent include polyoxyethylene alkyl ethers, sorbitan fatty acid esters, polyoxyethylene sorbitan fatty acid esters, glycerin fatty acid esters, and polyoxyethylene alkyl amines.

A commercially available product may be used as the antistatic agent. Examples of antistatic agents that are commercially available products include:
polyoxyethylene-polyoxypropylene block copolymer type nonionic surfactants such as ADEKA (registered trademark) PLURONIC L, P, F series and ADEKA (registered trademark) PLURONIC TR series;
alkyl ether type nonionic surfactants such as ADEKATOR LB series, ADEKATOR LA series, and ADEKATOR TN series;
ester type nonionic surfactants such as ADECANOL NK (glyceride ethylene oxide adduct);
special phenol type nonionic surfactants such as ADECATOR PC;
sulfate type anionic surfactants such as ADEKA HOPE series;
phosphate type or succinate type anionic surfactants such as ADEKACOL series;
quaternary cation type cationic surfactants such as ADEKAMIN series (the above products are products manufactured by ADEKA Corporation);
cationic surfactants such as ELECNON series (manufactured by Dainichiseika Color & Chemicals Mfg. Co., Ltd.);
amphoteric surfactants such as Electro Stripper AC (manufactured by Kao Corporation); and
nonionic surfactants such as EMULGEN series, LEODOR series, EXCEL series, and AMIET series (manufactured by Kao Corporation).

The UHMWPE porous layer 3 may have a single-layer structure or may have a laminated structure in which two or more UHMWPE porous layers having the same or different configurations are laminated.

The base layer 2 is a layer having an air permeability in the thickness direction of, for example, 1000 seconds/100 mL or more, preferably 3000 seconds/100 mL or more, and more preferably 4500 seconds/100 mL or more, as represented by a Gurley air permeability. The base layer 2 may be a layer having substantially no air permeability in the thickness direction (a layer having a Gurley air permeability of 10,000 seconds/100 mL or more). The base layer 2 may be a non-porous layer.

The base layer 2 is composed of, for example, at least one member selected from among resin, paper, and metal. The base layer 2 is preferably composed of paper and/or resin, and more preferably composed of resin, since the joining property with the UHMWPE porous layer 3 is excellent. In addition, in the case where the base layer 2 is composed of resin, the accuracy of pressing for a low-rigidity workpiece can be further improved. This is because the uniformity as a layer (for example, thickness and/or air permeability uniformity) can be made higher than that of paper, which is an aggregate of fibers, regardless of whether it is between lots or within a layer.

The paper that can form the base layer 2 may be plain paper composed of fibers such as pulp and cotton. However, in order to prevent the fibers that may become foreign matter from falling off, the paper may preferably be impregnated paper that is impregnated with a resin that bonds the fibers together. The impregnated paper is, for example, so-called low-dust-generating paper and dust-free paper that claim to be usable in a clean environment such as a clean room. A commercially available product, for example, STACLEAN manufactured by Sakurai Co., Ltd., can be used as the impregnated paper.

An example of the resin that can form the base layer 2 is at least a resin selected from among: polyester resins such as polyethylene terephthalate (PET), polybutylene terephthalate (PBT), and polyethylene naphthalate (PEN); polycarbonate resins (PC); acrylic resins such as polymethyl methacrylate (PMMA); polyolefin resins such as polyethylene and polypropylene; polyimide resins; and polystyrene resins. The resin is preferably PET or PC, and more preferably PET, since wrinkles and slacks are unlikely to occur in the workpiece protection sheet 1 and sufficient strength can be ensured even under a pressing condition. Examples of the metal include aluminum and stainless steel.

From the resin that can form the base layer 2, rubbers such as silicone rubber are desirably excluded. A joined body of the UHMWPE porous layer 3 and a rubber layer is normally produced by applying a raw rubber solution as a raw material to the UHMWPE porous layer 3 and curing the formed coating film. At this time, the solution may penetrate into the pores of the UHMWPE porous layer 3 and may reach the exposed surface of the UHMWPE porous layer 3 which is a contact surface to be in contact with a workpiece. In addition, the rubber cured in the pores deteriorates the cushioning property of the UHMWPE porous layer 3 and can impair the air permeability in the lateral direction.

The thickness of the base layer 2 is, for example, 0.0050 to 1.0 mm, and may be 0.010 to 0.50 mm. When the thickness of the base layer 2 is within these ranges, wrinkles and slacks are unlikely to occur in the workpiece protection sheet 1 and sufficient strength can be more reliably ensured even under a pressing condition.

The suction surface of the workpiece protection sheet 1 preferably has an appropriate surface roughness. When the suction surface has an appropriate surface roughness, it is easier to replace the workpiece protection sheet 1 from the suction table. For example, a suction surface having an appropriate surface roughness can be realized by using a base layer 2 subjected to a roughening treatment such as sandblasting.

Since the workpiece protection sheet 1 is a sheet that is used between a workpiece and the suction table, the thermal conductivity of the base layer 2 may be low unlike a mold release sheet that is used between a workpiece and a thermal pressure head of a hot pressing apparatus. The thermal conductivity of the base layer 2 may be 1.0 W/(m·K) or less, or may be 0.50 W/(m·K) or less, 0.35 W/(m·K) or less, or even 0.20 W/(m K) or less. The thermal conductivity of the base layer 2 can be evaluated by the protective heat flow meter method specified in ASTM E1530.

The base layer 2 may have a single-layer structure or may have a laminated structure in which two or more layers having the same or different configurations are laminated.

The workpiece protection sheet 1 typically includes one UHMWPE porous layer 3 and one base layer 2. However, the workpiece protection sheet 1 may include two or more UHMWPE porous layers 3 and/or two or more base layers 2.

The workpiece protection sheet 1 may include another layer other than the UHMWPE porous layer 3 and the base layer 2 as long as the suction surface to be sucked to the suction table is composed of the base layer 2 and the contact surface to be in contact with a workpiece is composed of the UHMWPE porous layer 3.

The workpiece protection sheet 1 can be formed by joining the UHMWPE porous layer 3 and the base layer 2, and further another layer in the case of including the other layer, to each other. Examples of the joining method include thermal joining and joining with an adhesive. However, the joining method is not limited thereto.

The thermal joining can be performed, for example, by a known heat lamination method.

The joining with the adhesive can be performed by a known method. In the joining with the adhesive, normally, an adhesive layer is formed between two joined layers. The adhesive layer in the workpiece protection sheet 1 does not have to have air permeability in the thickness direction.

Examples of the adhesive include various adhesives such as rubber types, acrylic types, and silicone types. The adhesive is preferably a hot melt agent. A known adhesive can be used as the adhesive.

The workpiece protection sheet 1 normally does not have an adhesive layer on both principal surfaces thereof.

The workpiece protection sheet 1 is, for example, in a flat sheet form. The workpiece protection sheet 1 that is in a flat sheet form is easily replaced from the suction table. The shape of the workpiece protection sheet 1 that is in a flat sheet form is, for example, a polygonal shape such as a square and a rectangle. However, the form of the workpiece protection sheet 1 is not limited to the flat sheet form. In the present description, the term "flat sheet form" means the form of a sheet other than a wound body and a long band-shape that can form a wound body. In the case where the sheet is rectangular, the ratio of the long side to the short side is, for example, 10 or less, and may be 8 or less, 5 or less, or even 3 or less. The length of the long side is, for example, 5 m or less, and may be 3 m or less or even 1 m or less. The workpiece protection sheet 1 in a flat sheet form may be in a form of being cut into a certain size and shape. In this case, the workpiece protection sheet 1 can be distributed in a state where a plurality of the sheets cut into a certain size and shape are bundled.

The area of the workpiece protection sheet 1 that is in a flat sheet form is, for example, 30 cm² or more, and may be 50 cm² or more, 100 cm² or more, 150 cm² or more, 500 cm² or more, 1000 cm² or more, or even 10000 cm² or more. The upper limit of the area of the workpiece protection sheet 1 that is in a flat sheet form is, for example, 30000 cm² or less.

The thickness of the workpiece protection sheet 1 is, for example, 0.2 to 0.7 mm, and may be 0.05 to 0.2 mm or 0.7 to 3.0 mm.

The air permeability in the thickness direction of the workpiece protection sheet 1 is 4000 seconds/100 mL or more, preferably 5000 seconds/100 mL or more, more preferably 6000 seconds/100 mL or more, further preferably 7000 seconds/100 mL or more, and particularly preferably 8000 seconds/100 mL or more, as represented by a Gurley air permeability (hereinafter, referred to as a "Gurley air permeability A") measured such that the base layer 2 side of the workpiece protection sheet 1 is at the upstream side of airflow during measurement. The air permeability in the thickness direction of the workpiece protection sheet 1 may be 10,000 seconds/100 mL or more as represented by the Gurley air permeability A.

In addition, the air permeability in the thickness direction of the workpiece protection sheet 1 may be 1000 seconds/100 mL or less, or may be 800 seconds/100 mL or less, 600 seconds/100 mL or less, 400 seconds/100 mL or less, or even 200 seconds/100 mL or less, as represented by a Gurley air permeability (hereinafter, referred to as a "Gurley air permeability B") measured such that the UHMWPE porous layer 3 side of the workpiece protection sheet 1 is at the upstream side of airflow during measurement. The lower limit of the Gurley air permeability B may be 1 second/100 mL or more. The value of the Gurley air permeability B may be equal to the value of the Gurley air permeability A. In the case where the value of the Gurley air permeability B is smaller than the value of the Gurley air permeability A, this means that the UHMWPE porous layer 3 also has air permeability in the lateral direction. The air permeability in the lateral direction of the UHMWPE porous layer 3 is considered to enhance the releasability of a workpiece after pressing with the workpiece protection sheet 1. The effect of enhancing the releasability is significant particularly in the case where the workpiece is in a thin flat sheet form. In addition, in the case where the value of the Gurley air permeability B is smaller than the value of the Gurley air permeability A, for example, by appropriately setting a threshold of the suction pressure for detecting placement of the workpiece protection sheet 1 onto the suction table and/or a threshold of a change in suction pressure, it is possible to automatically determine whether the workpiece protection sheet 1 is placed on the suction table in a correct orientation (front and back orientation). This is advantageous particularly in the case where the workpiece protection sheet 1 is in a flat sheet form and is replaced from the suction table at an appropriate timing, especially each time pressing is performed once.

Examples of the workpiece to be pressed using the workpiece protection sheet 1 include ceramic green sheets used for manufacturing laminated chips such as a laminated ceramic capacitor and a laminated chip inductor, and laminates thereof. Examples of the ceramic green sheets include dielectric ceramic green sheets and ferrite green sheets. However, the workpiece is not limited to thereto.

FIG. 2 shows an example of pressing of a workpiece using the workpiece protection sheet 1. As shown in FIG. 2, in a state where the workpiece protection sheet 1 is placed on a suction table 13 of a pressing apparatus 11 and a workpiece 14 is placed on the workpiece protection sheet 1, the workpiece 14 is pressed by a pressure head 12 of the pressing apparatus 11. At this time, the workpiece protection sheet 1 is sucked to the suction table 13 with the exposed surface of the base layer 2 as a suction surface, and the exposed surface of the UHMWPE porous layer 3 is in contact with the workpiece 14. The workpiece protection sheet 1 is normally replaced every predetermined number of times of pressing, and may be replaced each time pressing is performed once. The pressing may be heat pressing of pressing the workpiece 14 while applying heat.

A known apparatus can be used as the pressing apparatus 11. The suction table 13 is typically a vacuum suction table that generates suction force by using a negative pressure generated by a vacuum pump. A plurality of through holes for sucking air are normally provided in the surface of the suction table 13, and an article on the table is sucked by the suction force generated by the suction. The suction table 13 is normally a table provided in the pressing apparatus 11, but may be a table provided separately from the pressing apparatus 11.

### EXAMPLES

Hereinafter, the present invention will be described more specifically by way of Examples. The present invention is not limited to the following Examples.

First, methods for evaluating workpiece protection sheets prepared or produced in the Examples will be described.

[Thickness]

The thicknesses of the workpiece protection sheets and each of layers forming the workpiece protection sheets were evaluated by a micrometer (manufactured by Mitutoyo Corporation) or by analysis of a microscopic observation image on a cross-section of the sheet. In each of the evaluation methods, at least four measurement points were provided, and the average value of values evaluated at the respective measurement points was regarded as the thickness of each workpiece protection sheet or each of the layers forming the workpiece protection sheet.

[Surface Resistivity]

For the workpiece protection sheets of the Examples each having a laminated structure of the base layer 2 and the UHMWPE porous layer 3, the surface resistivity of the exposed surface of the UHMWPE porous layer 3, which is a contact surface to be in contact with a workpiece, was evaluated. For workpiece protection sheets of Comparative Examples each having a single-layer structure, the surface resistivity of the principal surface of each sheet was evaluated. In the evaluation of the surface resistivity, a high resistivity meter (Hiresta MCP-HT450, manufactured by Nittoseiko Analytech Co., Ltd.) equipped with a URS probe having a double ring electrode was used, a voltage of 500 V was applied, and the surface resistivity was measured at the time when 30 seconds elapsed. The upper limit of the measurement range of the high resistivity meter used is 1.0×10¹⁴ ohms per square. Therefore, when the surface to be evaluated has a surface resistivity exceeding 1.0×10¹⁴ ohms per square, "unmeasurable" is described in Table 1 below showing the evaluation results. The evaluation of the surface resistivity was carried out according to the standards of JIS K6911: 2006 in an atmosphere of 25°C and a relative humidity of 60%.

[Surface Roughness (Ra)]

For the workpiece protection sheets of the Examples each having a laminated structure of the base layer 2 and the UHMWPE porous layer 3, the Ra of the exposed surface of the UHMWPE porous layer 3, which is a contact surface to be in contact with a workpiece, was evaluated. For the workpiece protection sheets of the Comparative Examples each having a single-layer structure, the Ra of the principal surface of each sheet was evaluated. The evaluation of the Ra was carried out by a surface roughness measuring machine (SURFCOM 550A, manufactured by Mitutoyo Corporation) that complies with the JIS regulation (1976 or 1982 revised version) regarding "Geometrical Product Specifications (GPS)-Surface texture: Profile method-Terms, definitions and surface texture parameters". In addition, a measurement length of 4 mm, a moving speed of 0.3 mm/sec, a probe diameter of 250 µm R, a cutoff value of 0.8, and a magnification of 500 times were set as evaluation conditions, and the average value of values obtained by five measurements was regarded as the Ra.

[Releasability: Adhesive Strength of Adhesive Tape]

For the workpiece protection sheets of the Examples each having a laminated structure of the base layer 2 and the UHMWPE porous layer 3, the adhesive strength of an adhesive tape to the exposed surface of the UHMWPE porous layer 3, which is a contact surface to be in contact with a workpiece, was evaluated. For the workpiece protection sheets of the Comparative Examples each having a single-layer structure, the adhesive strength of an adhesive tape to the principal surface of each sheet was evaluated. It can be said that the lower the adhesive strength is, the higher the releasability of the surface is. The evaluation of the adhesive strength was carried out by the above-described method. However, Tensilon universal material tester RTF-1325 manufactured by A&D Company, Limited was used as a tensile tester.

[Air Permeability in Thickness Direction]

For the workpiece protection sheets of the Examples each having a laminated structure of the base layer 2 and the UHMWPE porous layer 3, the Gurley air permeability A and the Gurley air permeability B were evaluated as the air permeability in the thickness direction. For the workpiece protection sheets of the Comparative Examples each having a single-layer structure, a Gurley air permeability measured such that either surface of each sheet was at the upstream side of airflow during measurement was evaluated as the air permeability in the thickness direction. For the workpiece protection sheets of the Comparative Examples, the Gurley air permeability does not change even when either of the surfaces of each sheet is at the upstream side of airflow during measurement, and thus the evaluated Gurley air permeability is described in both of the cells for "Gurley air permeability A" and "Gurley air permeability B" in Table 1. The evaluation of the Gurley air permeability was carried out according to Method B (Gurley method) of air permeability measurement specified in JIS L1096.

(Example 1)

As the UHMWPE porous layer 3, a particle-bonded layer of UHMWPE (SUNMAP, manufactured by Nitto Denko Corporation, thickness: 0.18 mm, size: 200 mm × 200 mm) was prepared. This UHMWPE porous layer 3 had been subjected to an antistatic treatment. In addition, as the base layer 2, one sheet (thickness: 0.10 mm, size: 200 mm × 200 mm) selected from a bundle of paper sheets (STACLEAN HG78, manufactured by Sakurai Co., Ltd.) was prepared. Next, the prepared UHMWPE porous layer 3 and base layer 2 were attached and joined together with a SIS (styrene-isoprene-styrene) hot melt adhesive to obtain a workpiece protection sheet of Example 1. The amount of the adhesive applied was set to 8 g/m². Table 1 below shows the evaluation results of the obtained workpiece protection sheet.

(Example 2)

A workpiece protection sheet of Example 2 was obtained in the same manner as Example 1, except that a PET sheet (Mattle Mirror 100 × 30B, manufactured by KIMOTO Co., Ltd., thickness: 0.11 mm, size: 200 mm × 200 mm) in which both principal surfaces were roughened by sandblasting was used as the base layer 2. Table 1 below shows the evaluation results of the obtained workpiece protection sheet.

(Example 3)

A workpiece protection sheet of Example 3 was obtained in the same manner as Example 1, except that another sheet (thickness: 0.10 mm, size: 200 mm × 200 mm) selected from a bundle of paper sheets (STACLEAN HG78, manufactured by Sakurai Co., Ltd.) was used as the base layer 2. Table 1 below shows the evaluation results of the obtained workpiece protection sheet.

(Comparative Example 1)

The paper sheet prepared in Example 1 was used as a workpiece protection sheet of Comparative Example 1.

(Comparative Example 2)

The PET sheet prepared in Example 2 was used as a workpiece protection sheet of Comparative Example 2.

(Comparative Example 3)

A particle-bonded layer of UHMWPE (SUNMAP, manufactured by Nitto Denko Corporation, thickness: 0.18 mm, size: 200 mm × 200 mm) was used as a workpiece protection sheet of Comparative Example 3. This particle-bonded layer had not been subjected to an antistatic treatment.

**[Table 1]**

| | Surface resistivity [ohms per square] | Surface roughness (Ra) [µm] | Adhesive strength of adhesive tape [N/19 mm] | Gurley air permeability A [seconds/100 mL] | Gurley air permeability B [seconds/100 mL] |
|---|---|---|---|---|---|
| Example 1 | 8.4×10⁹ | 0.2 | 2.8 | 8420 | 157 |
| Example 2 | 5.2×10⁹ | 0.3 | 2.8 | 10,000 or more | 199 |
| Example 3 | 8.4×10⁹ | 0.2 | 2.8 | 4631 | 137 |
| Comparative Example 1 | 2.6×10¹⁰ | 1.0 | 3.3 | 3210 | 3210 |
| Comparative Example 2 | Unmeasurable (exceeding 1.0×10¹⁴) | 0.3 | 7.6 | 10,000 or more | 10,000 or more |
| Comparative Example 3 | Unmeasurable (exceeding 1.0× 10¹⁴) | 0.2 | 3.6 | 0.6 | 0.6 |

### INDUSTRIAL APPLICABILITY

The workpiece protection sheet of the present invention can be used for protecting a workpiece during pressing.

## Claims

1. A workpiece protection sheet that is used between a suction table and a workpiece in a state where the workpiece protection sheet is sucked to the suction table when the workpiece is pressed on the suction table, the workpiece protection sheet comprising:
a base layer; and
an ultrahigh molecular weight polyethylene porous layer, wherein
an air permeability in a thickness direction of the workpiece protection sheet measured such that the base layer side is at an upstream side of airflow during measuring is 4000 seconds/100 mL or more as represented by a Gurley air permeability measured according to Method B of air permeability measurement specified in JIS L1096,
a suction surface to be sucked to the suction table is composed of the base layer, and
a contact surface to be in contact with the workpiece is composed of the ultrahigh molecular weight polyethylene porous layer.

2. The workpiece protection sheet according to claim 1, wherein an air permeability in the thickness direction of the workpiece protection sheet measured such that the ultrahigh molecular weight polyethylene porous layer side is at the upstream side of airflow during measurement is less than 1000 seconds/100 mL as represented by a Gurley air permeability measured according to Method B of air permeability measurement specified in JIS L1096.

3. The workpiece protection sheet according to claim 1 or 2, wherein a surface roughness (Ra) of the contact surface is 0.9 µm or less.

4. The workpiece protection sheet according to any one of claims 1 to 3, wherein a surface resistivity of the contact surface is 9.9×10¹³ ohms per square or less.

5. The workpiece protection sheet according to any one of claims 1 to 4, wherein the base layer is composed of at least one member selected from among resin, paper, and metal.

6. The workpiece protection sheet according to claim 5, wherein the resin is at least one resin selected from among a polyester resin, a polycarbonate resin, an acrylic resin, a polyolefin resin, a polyimide resin, and a polystyrene resin.

7. The workpiece protection sheet according to any one of claims 1 to 6, wherein the workpiece protection sheet is in a flat sheet form.

8. The workpiece protection sheet according to any one of claims 1 to 7, wherein the workpiece is a ceramic green sheet.
